# EUROPEAN PATENT APPLICATION

(11) **EP 4 765 471 A1**
(43) Date of publication of application: **24.06.2026**
(21) Application number: 25845154.1
(22) Date of filing: 26.06.2025
(51) Int. Cl.: H01M 50/691, H01M 50/107, H01M 10/04

(54) **JIG FOR EXTRACTING ELECTROLYTE**

(30) Priority: 25.07.2024 KR 20240098434; 13.11.2024 KR 20240161264
(71) Applicant: LG Energy Solution, Ltd., Seoul 07335 (KR)
(72) Inventor: JUNG, Jongwook, Daejeon 34122 (KR); YOUN, Yeu Young, Daejeon 34122 (KR)
(74) Representative: Goddar, Heinz J.
(86) International application number: PCT/KR2025/008956
(87) International publication number: WO 2026/023890

(57) **Abstract**

A jig for extracting an electrolyte is provided. The jig may extract an electrolyte from a sample to be analyzed provided as a cylindrical battery or a jelly-roll electrode assembly having a vertical direction as a longitudinal direction. The jig includes a body part having a cylindrical battery accommodation groove formed on the upper surface and a support part for supporting the lower end of the sample to be analyzed. An electrolyte discharge flow path is formed on the upper surface of the support part, and a first electrolyte discharge port penetrates the support part in the vertical direction. The body part also includes a second electrolyte discharge port for discharging an electrolyte. The inlet of the first electrolyte discharge port is connected to the electrolyte discharge flow path, and the outlet of the first electrolyte discharge port is connected to the second electrolyte discharge port.

## Description

### Technical Field

The present application claims the benefit of priority based on Korean Patent Application No. 10-2024-0098434 filed on July 25, 2024 and Korean Patent Application No. 10-2024-0161264 filed on November 13, 2024, the entire disclosures of which are incorporated as a part of this specification.

The present disclosure relates to a jig for extracting an electrolyte, and relates to a jig for extracting an electrolyte that is mounted on a cylindrical type secondary battery or a jelly roll type electrode assembly in an electrolyte extraction system using centrifugation to facilitate extraction of an electrolyte.

### Background

In general, secondary batteries are batteries that may be used repeatedly through a discharging process that converts chemical energy into electrical energy and a charging process which is the reverse process, and commonly known types include nickel-cadmium (Ni-Cd) batteries, nickel-metal hydride (Ni-MH) batteries, lithium-metal batteries, lithium-ion (Li-ion) batteries, and lithium-ion polymer batteries. Among these secondary batteries, lithium secondary batteries have been commercialized and are widely used due to their high energy density and voltage, long cycle life, and low self-discharge rate.

A secondary battery may generally be manufactured by accommodating an electrode assembly, in which a cathode, a separator, and an anode are stacked and assembled, together with an electrolyte, in a case such as a cylindrical can or a square pouch.

Specifically, a unit cell is manufactured by cutting and stacking the cathode, separator, and anode in a pre-designed manner. By stacking, folding, or rolling a predetermined number of the manufactured unit cells, an electrode assembly may be manufactured.

In the case of a cylindrical battery, the unit cells may be prepared as an electrode assembly in the form of a jelly roll, and the electrode assembly and an electrolyte may be accommodated in a can to manufacture the battery.

Charging and discharging of a lithium secondary battery progresses as lithium ions are repeatedly intercalated and deintercalated from the lithium metal oxide of the cathode to the anode.

In the secondary battery, lithium ions move between the anode and cathode through the electrolyte, causing the battery to charge and discharge, and during this charging or discharging, the electrolyte may decompose, or gas may be generated inside the secondary battery due to side reactions between the electrodes and the electrolyte, and the continuously generated gas may cause an increase in the internal pressure of the battery, which may cause deformation of the battery, such as expansion of the thickness of the battery, and the adhesion between the electrode surfaces within the battery may vary locally, causing a problem that the electrode reactions not to occur uniformly across the entire electrode surface.

Therefore, qualitative and quantitative analyses of the main components of the electrolyte used in secondary batteries are being conducted, and nuclear magnetic resonance spectroscopy (NMR) is generally used to analyze the type and content of carbonate compounds, which are the main components of the electrolyte.

In order to perform this analysis of the electrolyte, it is necessary to extract the electrolyte within the secondary battery used.

The electrolyte extraction within a secondary battery is mainly performed by a method of directly extracting the electrolyte by drilling a fine hole in the secondary battery case or separating the electrode assembly from the secondary battery case and centrifuging it, and a method of extracting the electrolyte contained in the electrode by disassembling the electrode from the battery and then soaking it in a solvent.

The electrolyte extraction method using centrifugation has been specifically established for the 21700 type battery with a diameter of 21 mm and a length of 70 mm and the 18650 type battery with a diameter of 18 mm and a length of 65 mm among the cylindrical lithium secondary batteries currently in development. In addition, as secondary batteries are applied to various fields, it is necessary to accurately analyze the consumption and degeneration of electrolyte components for cylindrical secondary battery types of various specifications. Therefore, electrolyte extraction is required for cylindrical batteries of various specifications. For example, as the battery capacity increases, the size and characteristics of the battery differ significantly from existing batteries such as 21700 and 18650 types, making it difficult to directly apply existing extraction analysis methods, and in particular, in the case of medium- to large-sized batteries, safety issues may arise in the extraction of electrolyte through centrifugation due to the large weight and volume of the battery.

In addition, the existing method may cause unwanted side reactions when the electrolyte extracted from the battery reacts with the metal parts of the battery case, lowering the accuracy of the analysis.

In addition, when the amount of electrolyte extracted is small, it may become blocked by the bottom surface structure of the secondary battery or electrode assembly, preventing proper extraction. In addition, centrifugation extraction of jelly roll structures may cause short circuits if the bottom shape is pushed during separation.

Therefore, a technology is needed that may enhance extraction safety for various types of batteries and prevent contamination of the electrolyte during the extraction process.

### Brief Description

### Technical Goals

The present disclosure relates to a jig for extracting an electrolyte, and is to provide a jig for extracting an electrolyte that is mounted on a cylindrical type secondary battery or a jelly roll type electrode assembly in an electrolyte extraction system using centrifugation to facilitate extraction of an electrolyte.

Technical objects to be achieved by the present disclosure are not limited to the technical objects mentioned above, and other technical objects not mentioned may be clearly understood by those skilled in the art to which the present disclosure pertains from the description below.

### Technical Solutions

A jig for extracting an electrolyte of the present disclosure may be configured to extract an electrolyte from an analysis target sample provided as a cylindrical battery or a jelly roll electrode assembly with a vertical direction as a longitudinal direction.

The jig for extracting an electrolyte of the present disclosure may include:
a body part having a cylindrical battery accommodation groove formed on an upper surface thereof with the vertical direction as a central axis; and
a support part configured to support a lower end part of the analysis target sample inside the battery accommodation groove,
wherein an electrolyte discharge path is formed on an upper surface of the support part,
a first electrolyte discharge port penetrating the support part in the vertical direction is formed in the support part,
a second electrolyte discharge port for discharging the electrolyte is formed in the battery accommodation groove of the body part,
an inlet of the first electrolyte discharge port is connected to the electrolyte discharge path, and
an outlet of the first electrolyte discharge port is connected to the second electrolyte discharge port.

In the jig for extracting an electrolyte of the present disclosure, the support part may be provided in a disk shape with the upper surface formed as a plane perpendicular to the vertical direction.

In the jig for extracting an electrolyte of the present disclosure, a diameter of the upper surface of the support part may be identical to an inner diameter of the battery accommodation groove.

In the jig for extracting an electrolyte of the present disclosure, the upper surface of the support part may be formed in a planar shape, and a lower end part of the support part may be formed in a tapered shape.

In the jig for extracting an electrolyte of the present disclosure, an electrolyte discharge groove may be formed on the upper surface of the support part as the electrolyte discharge path.

In the jig for extracting an electrolyte of the present disclosure, the first electrolyte discharge port may be located at a center of the support part, the electrolyte discharge groove may have a diameter direction of the upper surface of the support part as a longitudinal direction, and one end part of the electrolyte discharge groove may be connected to the inlet of the first electrolyte discharge port.

In the jig for extracting an electrolyte of the present disclosure, a support member for spacing the lower end part of the analysis target sample apart from the upper surface of the support part may be provided on the upper surface of the support part, and the electrolyte discharge path may be formed as a space spaced between the upper surface of the support part and the lower end part of the analysis target sample by the support member.

In the jig for extracting an electrolyte of the present disclosure, the support member may be formed with a diameter direction of the upper surface of the support part as a longitudinal direction, and a plurality of the support members may be provided.

As another aspect, a jig for extracting an electrolyte of the present disclosure may include:
a body part having a cylindrical battery accommodation groove formed on an upper surface thereof with the vertical direction as a central axis; and
a support surface formed on a bottom surface of the battery accommodation groove to support a lower end part of the analysis target sample,
wherein an electrolyte discharge groove is formed on the support surface as an electrolyte discharge path,
an inlet of an electrolyte discharge port penetrating the support part in the vertical direction is formed on the support surface,
an outlet of the electrolyte discharge port for discharging the electrolyte is formed in the battery accommodation groove of the body part, and
the inlet of the electrolyte discharge port is connected to the electrolyte discharge path.

### Advantageous Effects

A jig for extracting an electrolyte of the present disclosure may extract electrolyte in a short period of time, thereby preventing electrolyte loss and electrode short-circuiting, and reducing side reactions caused thereby.

The jig for extracting an electrolyte of the present disclosure may enhance safety when using a centrifuge by minimizing vibration with an external container dedicated to centrifugation.

The jig for extracting an electrolyte of the present disclosure may be mounted on a cylindrical type secondary battery or a jelly roll type electrode assembly in an electrolyte extraction system using centrifugation to facilitate electrolyte extraction.

### Brief Description of Drawings

FIG. 1 is a cross-sectional view illustrating a jig for extracting an electrolyte of the present disclosure.
FIG. 2 is a cross-sectional view illustrating a state in which a body part and a support part are separated.
FIG. 3 is a perspective view illustrating an aspect of a support part.
FIG. 4 is a perspective view illustrating another aspect of a support part.

### Detailed Description

Hereinafter, aspects according to the present disclosure will be described in detail with reference to the accompanying drawings. In this process, the size or shape of the components shown in the drawings may be exaggerated for clarity and convenience of explanation. In addition, terms specifically defined in consideration of the configuration and operation of the present disclosure may vary according to the intentions or customs of users and operators. Definitions of these terms should be made based on the content throughout this specification.

In the description of the present disclosure, it should be noted that the orientation or positional relationship indicated by the terms such as "center", "upper", "lower", "left", "right", "vertical", "horizontal", "inner side", "outer side", "one surface", and "other surface" is based on the orientation or positional relationship shown in the drawing or the orientation or positional relationship normally arranged when using the product of the present disclosure, and it is intended only for explanation and brief description of the present disclosure, and is not to be construed as limiting the present disclosure as it does not suggest or imply that the device or element shown must necessarily be configured or operated in a specific orientation with a specific orientation.

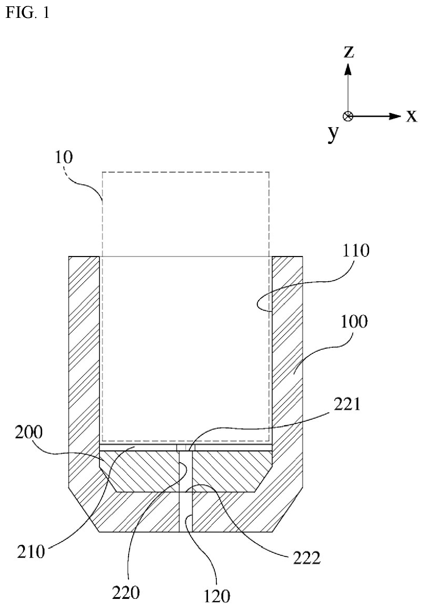

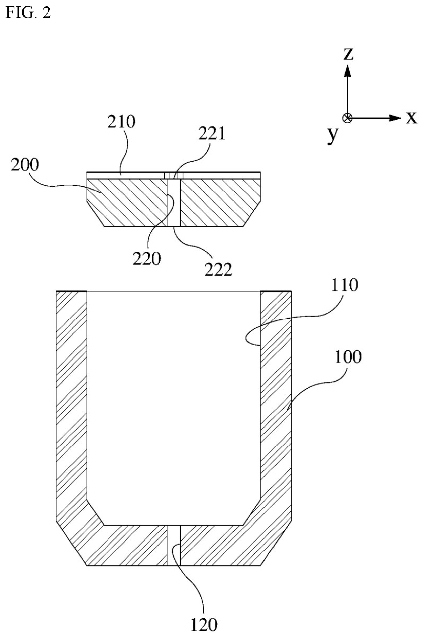

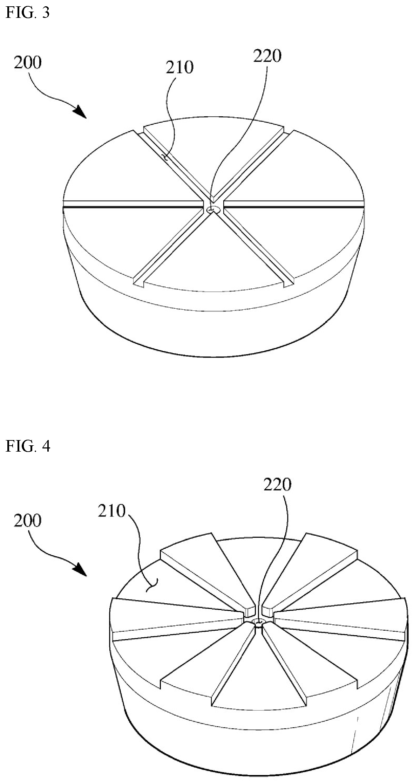

FIG. 1 is a cross-sectional view illustrating a jig for extracting an electrolyte of the present disclosure. FIG. 2 is a cross-sectional view illustrating a state in which a body part 100 and a support part 200 are separated. FIG. 3 is a perspective view illustrating an aspect of the support part 200. FIG. 4 is a perspective view illustrating another aspect of the support part 200.

Hereinafter, with reference to FIGS. 1 to 4, a jig for extracting an electrolyte of the present disclosure will be described. In FIGS. 1 to 4, the z-axis direction may be a vertical direction in the following description.

The jig for extracting an electrolyte of the present disclosure may be used when a centrifuge is used to extract an electrolyte from a cylindrical secondary battery. Specifically, in order to extract the electrolyte in the cylindrical secondary battery, the battery case may be perforated to extract the electrolyte, or a jelly roll type electrode assembly may be taken out of the battery case to extract the electrolyte from the electrode assembly. At this time, the secondary battery or the electrode assembly may be rotated by a centrifugal separation device that provides centrifugal force while being stored in a cylindrical centrifugal separation container (not shown) so that centrifugal force may be applied. For example, the jelly roll type electrode assembly may be an electrode assembly manufactured by rolling a unit cell in which [separator]-[anode]-[separator]-[cathode] are stacked.

When centrifugal force is applied to a secondary battery or an electrode assembly, the extracted electrolyte is collected at the end of a centrifugal separation container, and the collected electrolyte may be used for analysis.

The jig for extracting an electrolyte of the present disclosure may fix a cylindrical secondary battery or a jelly roll type electrode assembly in a centrifugal separation container without shaking.

In addition, the jig for extracting an electrolyte of the present disclosure may prevent the electrolyte extracted from the battery from reacting with the metal part of the battery case or the electrode assembly in the centrifugal separation container, thereby causing an undesirable side reaction and lowering the accuracy of the analysis.

In addition, the jig for extracting an electrolyte of the present disclosure may prevent the electrolyte from being properly extracted due to being blocked by the bottom surface structure of the secondary battery or the electrode assembly when the extracted amount of electrolyte is small.

As described above, an analysis target sample 10 provided as a cylindrical battery or jelly roll electrode assembly to which the jig for extracting an electrolyte of the present disclosure is applied may have the vertical direction as the longitudinal direction.

### Modes for Carrying Out

As illustrated in FIG. 1 and FIG. 2, a jig for extracting an electrolyte of the present disclosure may include:
a body part 100 having a cylindrical battery accommodation groove 110 formed on an upper surface thereof with the vertical direction as a central axis; and
a support part 200 configured to support a lower end part of an analysis target sample 10 inside the battery accommodation groove 110.

The lower end part of the analysis target sample 10 may be accommodated in a centrifugal separation container while being inserted into the battery accommodation groove 110 of the body part 100 together with the support part 200. A flow path is formed between the support part 200 and the body part 100, so that when centrifugal force is applied, the electrolyte may be discharged to the lower end part of the body part 100.

Specifically, an electrolyte discharge path 210 may be formed on the upper surface of the support part 200, a first electrolyte discharge port 220 penetrating the support part 200 in the vertical direction may be formed in the support part 200, and a second electrolyte discharge port 120 for discharging the electrolyte may be formed in the battery accommodation groove of the body part. Here, an inlet 221 of the first electrolyte discharge port 220 may be connected to the electrolyte discharge path, and an outlet 222 of the first electrolyte discharge port 220 may be connected to the second electrolyte discharge port.

The body part 100 and the support part 200 may be made of a chemically resistant and corrosion-resistant material, and may include one or more of PTFE, FEP, PFA, and PVDF. Therefore, even if the electrolyte comes into contact with the outer surface of the body part 100 after being discharged, the electrolyte may not be deteriorated because it does not react with the body part 100.

The inner diameter of the body part 100 (the inner diameter of the battery accommodation groove 110) may be designed to match the outer diameter of the analysis target sample 10. The outer diameter of the body part 100 may be designed to match the inner diameter of the centrifugal separation container. The inner and outer diameters of the body part 100 may be determined in consideration of the specifications of the analysis target sample 10. In particular, as the specifications increase to medium- to large-sized batteries, vibration problems in centrifugation may be directly linked to accidents, so the body part 100 may enhance the stability of extraction by firmly fixing the analysis target sample 10 within the centrifugal separation container.

As illustrated in FIG. 3, the support part 200 may be provided in a disk shape with an upper surface formed as a plane perpendicular to the vertical direction. The support part 200 may be a structure for preventing the lower end part of the analysis target sample 10 from being completely in contact with the bottom of the battery accommodation groove 110 and the electrolyte discharge from flowing to the second electrolyte discharge port 120 from being obstructed.

Specifically, an electrolyte discharge path 210 through which the electrolyte may flow is formed in the support part 200, and the electrolyte discharged from the analysis target sample 10 may be easily discharged to the outside of the body part 100 through the second electrolyte discharge port 120 into the space secured by the electrolyte discharge path 210 of the support part 200. The electrolyte discharged to the outside of the body part 100 may be collected at the lower end part of the centrifugal separation container and used for analysis.

The upper surface of the support part 200 may be formed as a plane. For example, in the case where the analysis target sample 10 is a jelly roll type electrode assembly, the upper surface of the support part 200 may be formed as a plane perpendicular to the vertical direction so that a layer-pushing phenomenon does not occur due to centrifugal force. The centrifugal separation device may rotate the centrifugal separation container with the rotation axis in a direction perpendicular to the vertical direction. In other words, the direction of the centrifugal force may be the vertical direction. Accordingly, bending at the bottom surface of the sample, such as a jelly roll type electrode assembly, is excluded, and an accident due to a short circuit occurring when the bottom surface of the sample is pressed due to compression during centrifugation may be prevented.

As illustrated in FIG. 1, the diameter of the upper surface of the support part 200 may be identical to the inner diameter of the battery accommodation groove 110. Therefore, the support part 200 may be prevented from being released inside the battery accommodation groove 110.

As illustrated in FIGS. 1 and 2, the upper surface of the support part 200 may be formed in a planar shape, and the lower end part of the support part 200 may be formed in a tapered shape. The bottom surface of the battery accommodation groove 110 may also be formed to correspond to the bottom surface of the support part 200. Specifically, the lower end part of the support part 200 may be formed in a tapered shape in which the diameter becomes shorter as it goes downward.

The support part 200 may be provided with a structure that may be attached to and detached from the body part 100. When the support part 200 is used multiple times, the support part 200 may be separated from the body part 100, washed, and reused. At this time, by forming the lower end part of the support part 200 in a tapered shape, the separation of the support part 200 from the body part 100 is facilitated, and when reattached, the support part 200 may be more stably attached to the body part 100 as centrifugal force is applied.

By providing the support part 200 with a structure that may be easily attached and detached from the body part 100 as described above, the cleanliness of the support part 200 may be maintained during repeated extractions, and the analysis accuracy of the extracted electrolyte may be improved.

In another aspect, the support part 200 and the body part 100 may be manufactured as an integrated body. For example, it may be manufactured by sintering in a single mold. The support part 200 and the body part 100 are manufactured as an integral body to prevent foreign substances from seeping between the structures.

For example, the jig for extracting an electrolyte in which the support part 200 and the body part 100 are manufactured as an integral body may include:
a body part having a cylindrical battery accommodation groove formed on an upper surface thereof with the vertical direction as a central axis; and
a support surface formed on a bottom surface of the battery accommodation groove to support a lower end part of the analysis target sample,
wherein an electrolyte discharge groove is formed on the support surface as an electrolyte discharge path,
an inlet of an electrolyte discharge port penetrating the support part in the vertical direction is formed on the support surface,
an outlet of the electrolyte discharge port for discharging the electrolyte is formed in the battery accommodation groove of the body part, and
the inlet of the electrolyte discharge port is connected to the electrolyte discharge path. In other words, the support surface performs the function of the support part described above, and the first electrolyte discharge port and the second electrolyte discharge port described above may be integrated into one electrolyte discharge port.

In one aspect, as illustrated in FIG. 3, an electrolyte discharge groove may be formed as the electrolyte discharge path 210 on the upper surface of the support part 200.

The first electrolyte discharge port 220 may be located at a center of the support part 200, the electrolyte discharge groove may have a diameter direction of the upper surface of the support part 200 as a longitudinal direction, and one end part of the electrolyte discharge groove may be connected to the inlet 221 of the first electrolyte discharge port 220.

The electrolyte discharge groove may be provided in one or plural forms. In the case where a plurality of electrolyte discharge grooves are provided, the plurality of electrolyte discharge grooves may be arranged at intervals at a predetermined angle, as illustrated in FIG. 3.

The electrolyte discharge groove may have a deeper depth as it approaches the inlet 221 of the first electrolyte discharge port 220 or the inlet of the electrolyte discharge port. The shallowest part of the electrolyte discharge groove may have a depth of 1 mm or more. The depth of the electrolyte discharge groove may be formed sufficiently deep, and depending on the aspect, it may be formed so deep that so as to penetrate the support part or the body part. The width of the electrolyte discharge groove may be formed to be 1 mm to 10 mm. If it is formed to be less than 1 mm, there is a possibility that the electrolyte discharge groove may be pressed by the jelly roll and the flow path may be blocked, and if it exceeds 10 mm, there is a risk of a short circuit. In other words, the electrolyte discharge groove may have a depth of 1 mm or more and a width of 1 mm to 10 mm, and one or more electrolyte discharge grooves may be provided in a structure that is connected to the inlet 221 of the first electrolyte discharge port 220 or the inlet of the electrolyte discharge port.

In another aspect, as illustrated in FIG. 4, a support member for spacing the lower end part of the analysis target sample 10 apart from the upper surface of the support part 200 may be provided on the upper surface of the support part 200, and the electrolyte discharge path 210 may be formed as a space spaced between the upper surface of the support part 200 and the lower end part of the analysis target sample 10 by the support member.

The support member may be formed with a diameter direction of the upper surface of the support part 200 as a longitudinal direction, and a plurality of the support members may be provided. As illustrated in FIG. 4, the plurality of support members may be arranged at intervals at a predetermined angle.

As illustrated in FIG. 4, the upper surface of the support member may have a constant area. For example, the upper surface of the support member may be formed in a fan shape. Since the upper surface of the support member has a constant area, the bottom surface of the analysis target sample 10 may be prevented from being locally crushed and warped.

Although aspects according to the present disclosure have been described above, they are only illustrative and those skilled in the art will understand that various modifications and aspects of equivalent range are possible therefrom. Therefore, the true technical protection scope of the present disclosure should be defined by the appended claims.

### <Explanation of Symbols>

10...Analysis target sample
100...Body part
110...Battery accommodation groove
120...Second electrolyte discharge port
200...Support part
210...Electrolyte discharge path
220...First electrolyte discharge port
221...Inlet of first electrolyte discharge port
222...Outlet of first electrolyte discharge port

## Claims

1. A jig for extracting an electrolyte from an analysis target sample of a cylindrical battery or a jelly roll electrode assembly with a longest side extending in a vertical direction, the jig comprising:
a body part having a cylindrical battery accommodation groove formed on an upper surface configured to face the analysis target sample,; and
a support part configured to support a lower end part of the analysis target sample inside the battery accommodation groove,
wherein the support part includes an upper surface configured to face the analysis target sample,
wherein an electrolyte discharge path is formed on the upper surface of the support part,
wherein a first electrolyte discharge port is formed in the support part and extends in the vertical direction,
wherein a second electrolyte discharge port configured to discharge the electrolyte is formed in the battery accommodation groove of the body part,
wherein an inlet of the first electrolyte discharge port is connected to the electrolyte discharge path, and
wherein an outlet of the first electrolyte discharge port is connected to the second electrolyte discharge port.

2. The jig for extracting an electrolyte of claim 1,
wherein the support part is provided in a disk shape with the upper surface defining a plane perpendicular to the vertical direction.

3. The jig for extracting an electrolyte of claim 2,
wherein a diameter of the upper surface of the support part is equal to an inner diameter of the battery accommodation groove.

4. The jig for extracting an electrolyte of claim 2,
wherein the upper surface of the support part is formed in a planar shape, and
wherein a lower end part of the support part is formed in a tapered shape.

5. The jig for extracting an electrolyte of claim 2,
wherein the electrolyte discharge path includes a groove formed on the upper surface of the support part.

6. The jig for extracting an electrolyte of claim 5,
wherein the first electrolyte discharge port is located at a radial center of the support part,
wherein the electrolyte discharge path extends across the diameter of the support part, and
an end of the electrolyte discharge path is connected to the inlet of the first electrolyte discharge port.

7. The jig for extracting an electrolyte of claim 2,
wherein a support member is provided on the upper surface of the support part and configured to form a space between the analysis target sample and the upper surface of the support part, and
wherein the electrolyte discharge path includes the space between analysis target sample and the upper surface of the support part.

8. The jig for extracting an electrolyte of claim 7,
wherein the support member extends from a circumferential end of the support part towards a radial center of the support part, and
a plurality of the support members are provided.

9. A jig for extracting an electrolyte from an analysis target sample of a cylindrical battery or a jelly roll electrode assembly with a longest side extending in a vertical direction, the jig comprising:
a body part having a cylindrical battery accommodation groove formed on an upper surface configured to face the analysis target sample; and
a support surface formed on a bottom surface of the battery accommodation groove and configured to support a lower end part of the analysis target sample,
wherein an electrolyte discharge path includes a groove formed on the support surface,
wherein an inlet of an electrolyte discharge port is formed in the support surface and extends in the vertical direction,
wherein an outlet of the electrolyte discharge port for discharging the electrolyte is formed in the battery accommodation groove of the body part, and
wherein the inlet of the electrolyte discharge port is connected to the electrolyte discharge path.
